## Europäisches Patentamt

## European Patent Office

## Office européen des brevets

(19)

(11) Veröffentlichungsnummer: **0 194 325**
**B1**

(12)                    **EUROPÄISCHE PATENTSCHRIFT**

(45) Veröffentlichungstag der Patentschrift:
23.08.89

(51) Int. Cl.⁴: **G 02 B 6/26**

(21) Anmeldenummer: **85102613.8**

(22) Anmeldetag: **07.03.85**

(54) **Reflexionsfreier Übergang zwischen Lichtleitfasern.**

(43) Veröffentlichungstag der Anmeldung:
**17.09.86 Patentblatt 86/38**

(45) Bekanntmachung des Hinweises auf die Patenterteilung:
**23.08.89 Patentblatt 89/34**

(84) Benannte Vertragsstaaten:
**AT BE CH DE FR GB IT LI LU NL SE**

(56) Entgegenhaltungen:
EP-A-0 068 410
DE-A-2 451 124
DE-A-2 938 649

**TIMMERMANN "Lichtenwellenleiter", Seiten 126, 143, 144, Friedrich Vieweg & Sohn, 1981, Braunschweig/Wiesbaden;**

(73) Patentinhaber: **Siemens Aktiengesellschaft, Wittelsbacherplatz 2, D-8000 München 2 (DE)**
Patentinhaber: **DIAMOND S.A., Via dei Patrizi, CH-6616 Losone- Locarno (CH)**

(72) Erfinder: **Heitmann, Walter, Dr., Am Seegärtchen 24, D-6107 Reinheim 4 (DE)**

(74) Vertreter: **Mehl, Ernst, Dipl.- Ing., Postfach 22 13 17, D-8000 München 22 (DE)**

## Beschreibung

Die Erfindung bezieht sich auf eine Koppelstelle zwischen zwei mit abgeschrägten zueinander parallelen Endflächen versehenen Lichtleitfasern.

Eine Koppelstelle zwischen zwei Lichtleitfasern im Zuge einer Lichtwellenleitersteckverbindung, bei der die beiden Lichtleitfasern mit abgeschrägten Endflächen einander gegenüberstehen, ist schon aus der E-PS-0 088 410 bekannt. Die Schrägstellung der Endflächen dient dabei in erster Linie dazu, um an den Endflächen reflektiertes Licht in einem solchen Winkel auf die zylindrische Grenzfläche der Lichtwellenleiter auftreffen zu lassen, daß das an den Endflächen reflektierte Licht den Lichtwellenleiter verlassen kann und somit keine Störungen bezüglich der im Lichtwellenleiter transportierten optischen Signale verursacht.

Für bestimmte Anwendungsfälle, wie z. B. bei optischen Übertragungssystemen mit sehr hohen Bitraten, für interferometrische Fasersensoren oder für kohärente Empfängersysteme (homodyn und heterodyn Empfang) werden Monomodefasern eingesetzt, die nur einen einzigen linear polarisierten Modus verlustarm übertragen. Dies kann z. B. durch einen elliptisch geformten Faserkern oder durch Spannungsdoppelbrechung in der Faser erreicht werden (S.C. Rashleigh, R.H. Stolen "Preservation of Polarization in Single-Mode-Fibers", Laser Focus, Mai 1983, Seiten 155 bis 161).

Vorliegender Erfindung liegt die Aufgabe zugrunde, Reflexionsverluste am Übergang zwischen zwei solchen linear polarisiertes Licht übertragenden Lichtleitfasern zu beseitigen.

Erfindungsgemäß ergibt sich die Lösung dieser Aufgabe dadurch, daß

a) die Lichtleitfasern als Monomodefasern zur Übertragung linear polarisierter Strahlung ausgebildet sind,

b) die Schrägstellung der Endflächen so gewählt ist, daß sowohl das Lot auf die Endfläche der ersten, als auch das Lot auf die Endfläche der zweiten Lichtleitfaser mit der jeweiligen Lichtleitfaserachse einen Winkel (φ) bildet, der sich als Brewsterwinkel aus der Formel φ = arc tan l/n errechnet, wobei n die mittlere Brechzahl des Kernmaterials der beiden Lichtleitfasern ist,

c) zwischen den Lichtleitfaserendflächen ein Abstand vorgesehen ist, und

d) die Lichtleitfaserachsen der ersten und der zweiten Lichtleitfaser gegeneinander versetzt sind.

Im Gegensatz zu den bekannten Lichtleitfaserkoppelstellen wird bewußt ein Abstand, also eine Luftstrecke, zwischen den Endflächen der gekoppelten Fasern vorgesehen und dadurch zusammen mit den weiteren erfindungsgemäßen Maßnahmen erreicht, daß neben der Beseitigung der Übergangsverluste auch Störungen durch reflektierte Anteile vermieden werden, weil solche Anteile gar nicht erst auftreten.

Nachfolgend wird anhand einer Fig. ein Ausführungsbeispiel der Erfindung noch näher erläutert.

Die Fig. zeigt in schematischer Darstellung eine Koppelstelle zwischen zwei Lichtleitfasern, wobei es unerheblich ist, in welcher Richtung die optischen Signale die beiden Lichtleitfasern 10, 20 durchlaufen.

Die beiden Endflächen 14, 24 der Lichtleitfasern 10, 20 sind so abgeschrägt vorgesehen, daß die Lote 11, 21 auf diese Endflächen 14, 24 mit den jeweiligen Faserachsen 12, 22 einen Winkel φ einschließen, der sich aus der Formel φ = arc tan l/n als sogenannter Brewsterwinkel errechnet. Der Brewsterwinkel φ ist derjenige Winkel, unter dem linear polarisiertes Licht die Grenzfläche eines transparenten Mediums reflexionsfrei passiert. Für die Brechzahl n kann bei einer Monomodefaser in guter Näherung die mittlere Brechzahl des Materials des Lichtleitfaserkerns 13, 23 eingesetzt werden. Die Brechzahl des Materials des Lichtleitfasermantels 15, 25, in welchem ja noch ein geringer Teil der Strahlung geführt wird, weicht nur um 0,3 - 0,5 von der Brechzahl des Lichtleitfaserkerns 13, 23 ab. Bei den verwendeten Lichtleitfasern 10, 20 aus reinem und dotiertem Quarzglas beträgt die mittlere Brechzahl n des Lichtleitfaserkerns 13, 23 im Spektralbereich zwischen 1000 nm und 1800 nm etwa n = 1,45. Im Strahlungsbereich zwischen 1200 nm und 1600 nm, in dem Monomodefasern überwiegend eingesetzt werden, ist die wellenlängenabhängige Brechzahländerung so gering, daß mit einem festen Winkel φ im gesamten Bereich nahezu Reflexionsfreiheit erreicht wird.

Durch den bei jedem Übergang zwischen den Endflächen 14, 24 zweier Lichtleitfasern 10, 20 bestehenden Abstand 31 entsteht beim Übergang der Strahlung von einer zu anderen Lichtleitfaser 10, 20 eine Strahlversetzung. Diese Strahlversetzung beträgt das 0,4- bis 0,5-fache der Endflächen 14, 24 der Lichtleitfasern 10, 20. Zum Ausgleich dieses Versatzes werden die Achsen 12, 22 der Lichtleitfasern 10, 20 um den gleichen Betrag 30 gegeneinander versetzt.

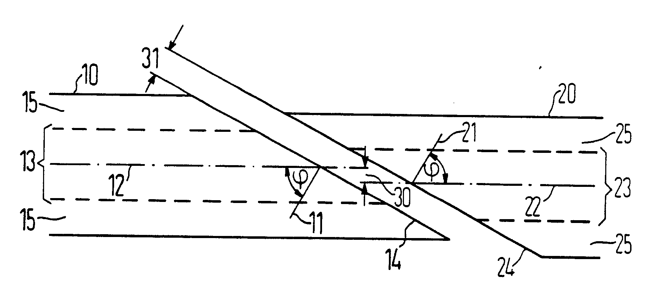

## Patentansprüche

1. Koppelstelle zwischen zwei mit abgeschrägten zueinander parallelen Endflächen (14, 24) versehenen Lichtleitfasern (10, 20), dadurch gekennzeichnet, daß

a) die Lichtleitfasern als Monomodefasern zur Übertragung linear polarisierter Strahlung ausgebildet sind,

b) die Schrägstellung der Endflächen (14, 24) so gewählt ist, daß sowohl das Lot (11) auf die Endfläche (14) der ersten (10), als auch das Lot (21) auf die Endfläche (24) der zweiten Lichtleitfaser (20) mit der jeweiligen Lichtleitfaserachse (12, 22) einen Winkel (φ) bildet, der sich als Brewsterwinkel aus der Formel φ = arc tan l/n errechnet, wobei n die mittlere Brechzahl des Kernmaterials (13, 23) der beiden Lichtleitfasern (10, 20) ist,

c) zwischen den Lichtleitfaserendflächen (14, 24) ein Abstand (31) vorgesehen ist, und

d) die Lichtleitfaserachsen (12, 22) der ersten und der zweiten Lichtleitfaser (10, 20) gegeneinander versetzt sind.

2. Koppelstelle nach Anspruch 1, dadurch gekennzeichnet, daß die Versetzung (30) der beiden Lichtleitfaserachsen (12, 22) das 0,4-bis 0,5-fache des Abstandes (31) der beiden Lichtleitfaserendflächen (14, 24) beträgt.


**Claims**

1. Coupling point between two light-conducting fibres (10, 20) which are provided with sloped mutually parallel end faces (14, 24), characterized in that

a) the light-conducting fibres are constructed as monomode fibres for transmitting lineally polarized radiation,

b) the slope of the end faces (14, 24) is selected in such a manner that both the perpendicular (11) to the end face (14) of the first (10) and the perpendicular (21) to the end face (24) of the second light-conducting fibre (20) forms an angle (φ) with the respective light-conducting fibre axis (12, 22) which is calculated as Brewster angle from the formula φ = arc tan l/n, where n is the mean refractive index of the core material (13, 23) of the two light-conducting fibres (10, 20),

c) a space (31) is provided between the light-conducting fibre end faces (14, 24), and

d) the light-conducting fibre axes (12, 22) of the first and of the second light-conducting fibre (10, 20) are offset with respect to one another.

2. Coupling point according to claim 1, characterized in that the offset (30) of the two light-conducting fibre axes (12, 22) is 0.4 to 0.5 times the space (31) between the two light-conducting fibre end faces (14, 24).


**Revendications**

1. Point de couplage entre deux fibres optiques (10, 20) comportant des surfaces d'extrémité (14, 24) biseautées et parallèles entre elles, caractérisé par le fait que

a) les fibres optiques sont réalisées sous la forme de fibres monomode pour la transmission d'un rayonnement polarisé linéairement,

b) la position oblique des surfaces d'extrémité (14, 24) est choisie de manière qu'aussi bien la normale (11) à la surface d'extrémité (14) de la première fibre optique que la normale (21) à la surface d'extrémité (24) de la seconde fibre optique (20) font, avec les axes respectifs (12, 22) des fibres optiques, un angle (φ), qui se calcule en tant qu'angle de Brewster à partir de la formule φ = arc tg l/n, n représentant l'indice de réfraction moyen du matériau (13, 23) du coeur des deux fibres optiques (10, 20),

c) il est prévu un intervalle (31) entre les surfaces d'extrémité (14, 24) des fibres optiques, et

d) les axes (12, 22) des première et seconde fibres optiques (10, 20) sont décalés entre eux.

2. Point de couplage suivant la revendication 1, caractérisé par le fait que le décalage (30) des deux axes (12, 22) des fibres optiques est compris entre 0,4 et 0,5 fois la distance (31) entre les deux surfaces d'extrémité (14, 24) des fibres optiques.